# EUROPÄISCHE PATENTSCHRIFT

(11) **EP 4 147 436 B1**
(45) Veröffentlichungstag und Bekanntmachung des Hinweises auf die Patenterteilung: **17.06.2026**
(21) Anmeldenummer: 21721060.8
(22) Anmeldetag: 21.04.2021
(51) Int. Cl.: H04L 67/12

(54) **SYSTEM UND VERFAHREN ZUR DYNAMISCHEN VERBESSERUNG VON FAHRZEUGDIAGNOSESYSTEMEN**
SYSTEM AND METHOD FOR DYNAMICALLY IMPROVING VEHICLE DIAGNOSTIC SYSTEMS
SYSTÈME ET PROCÉDÉ D'AMÉLIORATION DYNAMIQUE DE SYSTÈMES DE DIAGNOSTIC DE VÉHICULE

(30) Priorität: 06.05.2020 DE 102020112327
(43) Veröffentlichungstag der Anmeldung: 15.03.2023
(73) Patentinhaber: Bayerische Motoren Werke Aktiengesellschaft, 80809 München (DE)
(72) Erfinder: BANDARRA, Marta, 85399 Hallbergmoos (DE)
(86) Internationale Anmeldenummer: PCT/EP2021/060438
(87) Internationale Veröffentlichungsnummer: WO 2021/224010

(56) Entgegenhaltungen:
- DE-A1- 102017 213 235
- DE-A1- 102017 218 094

## Beschreibung

Die vorliegende Erfindung betrifft ein System und ein Verfahren zur dynamischen Verbesserung von Fahrzeugdiagnosesystemen.

Fahrzeugdiagnosesysteme sind bekannt. Dabei handelt es sich um Systeme, die eine Vielzahl von technischen Verfahren und Anwendungen umfassen können, um bei der Fehleranalyse eine genaue Zuordnung von Befunden zu Fehlern an elektrischen und elektronischen Komponenten im Fahrzeug zu ermöglichen. Nachteilig an solchen Diagnosesystemen ist, dass Fehler an elektrischen und elektronischen Komponenten mithilfe von Funktionen beschrieben werden und ein Fehler erst erkannt wird, wenn ein vorbestimmbarer bzw. vorbestimmter Schwellenbereich überschritten wird. Jedem Fehler wird dabei ein bestimmter Fehlercode bzw. Errorcode bzw. Diagnostic Trouble Code (DTC) zugeordnet. Ein weiterer Nachteil ist, dass nur ein bekannter Fehler, dem bereits ein bestimmter Fehlercode zugeordnet ist, auch erkannt wird. Dies kann dazu führen, dass ein Kunde zwar eine Störung am Fahrzeug wahrnimmt, dieser aber nicht als Fehler durch das Fahrzeugdiagnosesystem erkannt wird, weil ein Schwellenwert nicht überschritten wird und/oder der Fehler als solcher nicht erkannt wird, da kein entsprechender Fehlercode existiert.

Die Druckschrift DE 10 2017 218 094 A1 offenbart ein System zur dynamischen, fahrzeugspezifischen Steuerung eines Navigationssystems in einem Fahrzeug, umfassend zumindest einen Backend-Server, wobei der Backend-Server eingerichtet ist, eine Nachricht umfassend technische Zustandsparameter vom Fahrzeug zu empfangen, wobei die technischen Zustandsparameter eine Fahrzeugidentifikationsnummer und zumindest einen zu ändernden technischen Zustand des Fahrzeugs umfassen, eine Antwort mit Bezug auf die technischen Zustandsparameter zu erstellen, wobei die Antwort einen Zielort zur Verwendung durch das Navigationssystem des Fahrzeugs umfasst; und die Antwort an das Fahrzeug zu übertragen.

Die Druckschrift DE 10 2017 213 235 A1 offenbart ein Verfahren zum Ermitteln eines Benutzerfeedbacks bei einer durch einen Benutzer vorgenommenen Benutzung eines Geräts, wobei durch eine Steuervorrichtung während der Benutzung zumindest ein Auslöseereignis detektiert wird und jeweils bei detektiertem Auslöseereignis ein Sprachdialog mit dem Benutzer durchgeführt wird, wobei in dem Sprachdialog gesprochene Benutzerangaben zu dem Auslöseereignis ermittelt werden, und die im Sprachdialog ermittelten Benutzerangaben an eine vorbestimmte Auswerteeinrichtung ausgesendet werden.

Die Aufgabe der Erfindung besteht darin, eine Lösung bereitzustellen, die eine verbesserte, dynamische Erfassung von Fehlern im Fahrzeug ermöglicht und somit Fahrzeugdiagnosesysteme verbessert.

Diese Aufgabe wird erfindungsgemäß durch die Merkmale der unabhängigen Ansprüche gelöst. Bevorzugte Ausführungsformen sind Gegenstand der abhängigen Ansprüche.

Die vorstehend genannte Aufgabe wird durch ein System zur einfachen und dynamischen Verbesserung eines Fahrzeugdiagnosesystems umfassend zumindest ein Fahrzeug gelöst, wobei das Fahrzeug umfasst:
eine Eingabeeinheit, die eingerichtet ist, eine Eingabe mit Bezug auf einen Fahrzeugfehler zu empfangen; eine Steuereinheit, die eingerichtet ist, nach empfangener Eingabe über die Eingabeeinheit einen Schnappschuss der elektrischen und/oder elektronischen Fahrzeugkomponenten zu erstellen, wobei der Schnappschuss einen aktuellen Status aller elektrischen und/oder elektronischen Fahrzeugkomponenten zum Zeitpunkt der empfangenen Eingabe und einen Zeitstempel des Zeitpunkts der empfangenen Eingabe über die Eingabeeinheit umfasst und weiterhin eine Softwareversion, die im Fahrzeug bzw. in den elektrischen und/oder elektronischen Fahrzeugkomponenten des Fahrzeugs installiert sind und ausgeführt werden, umfasst,eine Feedbackeinheit, wobei die Feedbackeinheit als Sprachdialogsystem eingerichtet ist, Feedback über den Fahrzeugfehler zu erfassen;wobei das Erfassen des Feedbacks das Einteilen des Feedbacks in eine vorgegebene Problembeschreibungs-Struktur umfasst, wobei die Problembeschreibungsstruktur die folgenden Elemente umfasst:- Ort bzw. Fahrzeugteil, an dem das Problem wahrgenommen wird,- Umstände bzw. Bedingungen, unter denen das Problem auftritt, und-Häufigkeit des Auftretens des Problems, wobei die Feedbackeinheit eingerichtet ist, das Feedback zu verarbeiten und einen Schweregrad eines Problems aus dem Feedback abzuleiten; und wobei das erfasste Feedback in den Schnappschuss integriert wird; und eine Kommunikationseinheit, die eingerichtet ist, den erstellten Schnappschuss an ein Backend zu übermitteln;wobei das Backend ausgebildet ist, um den empfangenen Schnappschuss zur Fehlerdiagnose auszuwerten.

Das System umfasst zumindest ein Fahrzeug. Der Begriff Fahrzeug umfasst im Rahmen des Dokuments mobile Verkehrsmittel, die dem Transport von Personen (Personenverkehr), Gütern (Güterverkehr) oder Werkzeugen (Maschinen oder Hilfsmittel) dienen. Insbesondere umfasst der Begriff Fahrzeug Kraftfahrzeuge sowie Kraftfahrzeuge, die zumindest teilweise elektrisch angetrieben sein können (Elektroauto, Hybridfahrzeuge).

Das Fahrzeug kann von einem Fahrzeugführer gesteuert werden. Darüber hinaus oder alternativ dazu kann das Fahrzeug ein zumindest teilweise automatisiert fahrendes Fahrzeug sein. Unter dem Begriff "automatisiertes fahrendes Fahrzeug" bzw. "automatisiertes Fahren" kann im Rahmen des Dokuments ein Fahren mit automatisierter Längs- oder Querführung oder ein autonomes Fahren mit automatisierter Längs- und Querführung verstanden werden. Bei dem automatisierten Fahren kann es sich beispielsweise um ein zeitlich längeres Fahren auf der Autobahn oder um ein zeitlich begrenztes Fahren im Rahmen des Einparkens oder Rangierens handeln. Der Begriff "automatisiertes Fahren" umfasst ein automatisiertes Fahren mit einem beliebigen Automatisierungsgrad. Beispielhafte Automatisierungsgrade sind ein assistiertes, teilautomatisiertes, hochautomatisiertes oder vollautomatisiertes Fahren. Diese Automatisierungsgrade wurden von der Bundesanstalt für Straßenwesen (BASt) definiert (siehe BASt-Publikation "Forschung kompakt", Ausgabe 11/2012). Beim assistierten Fahren führt der Fahrer dauerhaft die Längs- oder Querführung aus, während das System die jeweils andere Funktion in gewissen Grenzen übernimmt. Beim teilautomatisierten Fahren übernimmt das System die Längs- und Querführung für einen gewissen Zeitraum und/oder in spezifischen Situationen, wobei der Fahrer das System wie beim assistierten Fahren dauerhaft überwachen muss. Beim hochautomatisierten Fahren übernimmt das System die Längs- und Querführung für einen gewissen Zeitraum, ohne dass der Fahrer das System dauerhaft überwachen muss; der Fahrer muss aber in einer gewissen Zeit in der Lage sein, die Fahrzeugführung zu übernehmen. Beim vollautomatisierten Fahren kann das System für einen spezifischen Anwendungsfall das Fahren in allen Situationen automatisch bewältigen; für diesen Anwendungsfall ist kein Fahrer mehr erforderlich. Die vorstehend genannten vier Automatisierungsgrade entsprechen den SAE-Level 1 bis 4 der Norm SAE J3016 (SAE - Society of Automotive Engineering). Ferner ist in der SAE J3016 noch der SAE-Level 5 als höchster Automatisierungsgrad vorgesehen, der in der Definition der BASt nicht enthalten ist. Der SAE-Level 5 entspricht einem fahrerlosen Fahren, bei dem das System während der ganzen Fahrt alle Situationen wie ein menschlicher Fahrer automatisch bewältigen kann.

Das Fahrzeug umfasst eine Eingabeeinheit. Die Eingabeeinheit kann beispielsweise Teil eines Infotainmentsystems des Fahrzeugs sein. Die Eingabeeinheit kann mittels Sprachbedienung und/oder Touch-Bedienung und/oder Tastenbedienung und/oder jede beliebige weitere Bedienmöglichkeit bedient werden. Die Eingabeeinheit ist eingerichtet, eine Eingabe mit Bezug auf einen Fahrzeugfehler zu empfangen. Beispielsweise kann ein Nutzer des Fahrzeugs über bei Erkennung eines Fahrzeugfehlers mit Bezug auf eine elektronische und/oder elektrische Komponente des Fahrzeugs über die Eingabeeinheit eine Eingabe mit Bezug auf den Fahrzeugfehler tätigen. Dies kann auf sehr komfortable Weise erfolgen. Beispielsweise kann eine im Fahrzeug vorinstallierte Applikation bzw. App bereitgestellt werden, mittels derer durch eine Spracheingabe und/oder eine Touch-Eingabe über ein Touchscreen und/oder eine andere geeignete Eingabe der erkannte Fahrzeugfehler eingegeben werden.

Das Fahrzeug umfasst eine Steuereinheit. Die Steuereinheit ist eingerichtet, nach empfangener Eingabe mit Bezug auf den Fahrzeugfehler über die Eingabeeinheit einen Schnappschuss der elektrischen und/oder elektronischen Fahrzeugkomponenten zu erstellen. Der Schnappschuss kann eine geeignete Datenstruktur sein und einen aktuellen Zustand der elektrischen und/oder elektronischen Fahrzeugkomponenten zum Zeitpunkt der empfangenen Eingabe mit Bezug auf den Fahrzeugfehler über die Eingabeeinheit umfassen. Dies ist besonders vorteilhaft, da der Nutzer des Fahrzeugs keine Information über die elektrische(n) und/oder elektronische(n) Komponente, die für den wahrgenommenen Fahrzeugfehler verantwortlich ist, haben kann. Somit wird ein Schnappschuss sämtlicher elektrischer und/oder elektronischer Fahrzeugkomponenten zum Zeitpunkt der Wahrnehmung des Fahrzeugfehlers durch den Nutzer des Fahrzeugs erstellt, der im späteren Verlauf analysiert werden kann. Die elektrischen und/oder elektronischen Komponenten des Fahrzeugs können die gesamte Fahrzeug- bzw. Automobilelektronik umfassen, also den gesamten Bereich der Elektronik im Fahrzeug. Diese können sämtliche Steuergeräte, die im Fahrzeug verteilt sind, umfassen. Die Steuergeräte können Steuergeräte mit Bezug auf das Kombiinstrument im Fahrzeug, mit Bezug auf die Motorsteuerung im Fahrzeug, mit Bezug auf Fahrerassistenzsysteme im Fahrzeug, mit Bezug auf Airbagsysteme im Fahrzeug, mit Bezug auf Alarmanlagen im Fahrzeug, mit Bezug auf Multimediasysteme im Fahrzeug etc. umfassen.

Das Fahrzeug umfasst eine Feedbackeinheit. Die Feedbackeinheit ist eingerichtet, Feedback über den Fahrzeugfehler zu erfassen;
wobei das Erfassen des Feedbacks das Einteilen des Feedbacks in eine vorgegebene Problembeschreibungs-Struktur umfasst;
wobei die Feedbackeinheit eingerichtet ist, das Feedback zu verarbeiten und einen Schweregrad eines Problems aus dem Feedback abzuleiten; und
wobei das erfasste Feedback in den Schnappschuss integriert wird.

Das Fahrzeug kann zudem eine Feedbackeinheit bzw. ein Feedbackmodul umfassen. Die Feedbackeinheit ist eingerichtet, vom Nutzer bzw. Fahrer des Fahrzeugs weitere Informationen bzw. Daten mit Bezug auf den Fahrzeugfehler zu erfassen. Beispielsweise kann ein vordefinierter Dialog über eine Ein- und Ausgabeeinheit im Fahrzeug, beispielsweise das Infotainmentsystem des Fahrzeugs, durchgeführt werden. Somit können weitere, insbesondere durch den Nutzer bzw. Fahrer des Fahrzeugs wahrgenommene Störungen mit Bezug auf den wahrgenommenen Fahrzeugfehler erfasst werden. Das durch die Feedbackeinheit erfasste Feedback bzw. die durch die Feedbackeinheit erfassten Feedbackdaten kann bzw. können in den Schnappschuss integriert werden.

Beispielsweise kann die Feedbackeinheit ein Sprachdialogsystem umfassen, um das Feedback des Nutzers bzw. Fahrers des Fahrzeugs mit Bezug auf die wahrgenommene Störung mit Bezug auf den wahrgenommenen Fahrzeugfehler umfassen. Ein Sprachdialogsystem ist im Rahmen dieses Dokuments ein System, über das Personen Dialoge in natürlicher Sprache führen und so die natürliche Sprache als Ein-und/oder Ausgabemedium nutzen können. Das Erfassen des Feedbacks über das Sprachdialogsystem, welches Teil des Infotainmentsystems des Fahrzeugs sein kann, ist besonders vorteilhaft, da das Feedback eingeholt werden kann, ohne dass der Nutzer bzw. Fahrer des Fahrzeugs Bedienelemente zur Eingabe des Feedbacks nutzen muss. Dadurch wird vermieden, dass der Nutzer bzw. Fahrer des Fahrzeugs vom Straßenverkehr abgelenkt wird. Darüber hinaus oder alternativ dazu kann die Feedbackeinheit eine Ein- und Ausgabeeinheit umfassen, die Teil des Infotainmentsystem des Fahrzeugs sein kann. Hier kann beispielsweise durch Touch-Eingabe, Eingabe über ein Bedienelement etc. über ein Fenster Feedback über den Fahrzeugfehler erfasst werden.

Das Erfassen des Feedbacks umfasst das Einteilen des Feedbacks in eine vorgegebenen bzw. vorgebbaren Problembeschreibungs-Struktur.

Die Problembeschreibungsstruktur umfasst die in Anspruch 1 aufgeführten Elemente und vorzugsweise
- Anzeichen bzw. Anhaltspunkte mit Bezug auf das Problem, z.B. Rauchentwicklung, Geräusche, etc.

Aus der Verarbeitung des Feedbacks kann die Feedbackeinheit die Schwere bzw. Schweregrad des Problems ableiten, wobei der Schweregrad in verschiedene Bereiche klassifiziert werden kann, z.B. schwerwiegend, wenn das Wohl der Fahrzeuginsassen und/oder anderer Verkehrsteilnehmer betroffen wird oder leicht, wenn es sich um eine Störung der Verkehrslageinformationen im Navigationsmodul des Fahrzeugs handelt. Beispiele für die Bereitstellung des Feedbacks durch einen Nutzer bzw. Fahrer des Fahrzeugs über ein Sprachdialogsystem bei einem Problem mit Bezug Verkehrslageinformationen können sein:
- "Es liegt eine Straßensperrung vor, die nicht angezeigt wurde";
- "Warum wurde diese Straßensperrung nicht angezeigt";
- "Warum wurde dieser Unfall nicht angezeigt";
- "Warum hast du diesen Unfall nicht vorausgesehen"; etc.

Beispiele für die Bereitstellung des Feedbacks durch einen Nutzer bzw. Fahrer des Fahrzeugs über ein Sprachdialogsystem mit Bezug auf ein mechanisches Problem können sein:
- "Immer wenn ich das Fahrzeug starte, macht es komische Geräusche";
- "Immer wenn ich den Motor anlasse, höre ich komische Geräusche";
- "Immer wenn ich das Fahrzeug stoppe macht der Motor klopfende Geräusche";
- "Immer, wenn ich den Motor ausmache, macht der Motor klopfende Geräusche";
- "Während der Fahrt macht der Motor manchmal röchelnde Geräusche"; etc.

So kann die Feedbackeinheit aus dem Feedback "Immer, wenn ich den Motor ausmache, macht der Motor klopfende Geräusche" folgendes ableiten:
- Ort bzw. Fahrzeugteil, an dem das Problem wahrgenommen wird: Motor;
- Anzeichen bzw. Anhaltspunkte mit Bezug auf das Problem: klopfende Geräusche;
- Umstände bzw. Bedingungen, unter denen das Problem auftritt: beim Motor-Stopp;
- Häufigkeit des Auftretens des Problems: bei jedem Motor-Stopp;
- Schweregrad des Problems: Mittelschweres Problem, eine Werkstatt sollte demnächst aufgesucht werden.

Analog zum vorgenannten Beispiel können auch über andere Eingabemöglichkeiten eingegebene Problembeschreibungen durch die Feedbackeinheit klassifiziert werden.

Vorteilhafter Weise kann so zusätzlich zu den technischen Zustandsdaten der elektrischen und/oder elektronischen Komponenten des Fahrzeugs die durch den Nutzer bzw. Fahrer des Fahrzeugs wahrgenommene Störung mit Bezug auf den Fahrzeugfehler erfasst, in den Schnappschuss integriert und mit an das Backend zur möglichen Fehlerdiagnose übermittelt werden. Die Wahrnehmung des Nutzers bzw. Fahrers des Fahrzeugs mit Bezug auf den Fahrzeugfehler bietet einen wesentlichen Vorteil bei der Identifizierung des Fahrzeugfehlers und/oder der Ursachen für den Fahrzeugfehler im Vergleich zu konventionellen Fahrzeugdiagnosesystemen. Durch die Klassifikation des Feedbacks über die Feedbackeinheit kann eine einheitliche Datenstruktur zur Problembeschreibung realisiert und an das Backend zur möglichen Fehlerdiagnose übermittelt werden. Vorteilhafterweise können so der Schnappschuss und das Feedback in eine einheitliche Gesamt-Datenstruktur zusammengefügt bzw. gemerged werden.

Das System umfasst ein Backend. Das Backend kann zumindest einen Backend-Server umfassen und/oder Teil von Cloud-Computing bzw. einer IT-Infrastruktur, die über das Internet Speicherplatz, Rechenleistung und/oder Anwendungssoftware als Dienstleistung zur Verfügung stellt (Service Provider), sein.

Das Fahrzeug umfasst eine Kommunikationseinheit. Die Kommunikationseinheit kann eine im Fahrzeug angeordnete Kommunikationseinheit sein, die eingerichtet ist, eine Kommunikationsverbindung mit anderen Kommunikationsteilnehmern, beispielsweise dem Backend und/oder einem mobilen Endgerät, aufzubauen. Die Kommunikationseinheit kann ein Teilnehmeridentitätsmodul bzw. ein Subscriber Identity Module bzw. eine SIM-Karte umfassen, welche(s) dazu dient, eine Kommunikationsverbindung über ein Mobilfunksystem aufzubauen. Das Teilnehmeridentitätsmodul identifiziert dabei die Kommunikationseinheit eindeutig im Mobilfunknetz. Bei der Kommunikationsverbindung kann es sich um eine Datenverbindung (z.B. Paketvermittlung) und/oder um eine leitungsgebundene Kommunikationsverbindung (z.B. Leitungsvermittlung) handeln. Die Kommunikation kann nach dem Cellular Vehicle To X (C-V2X)-Paradigma gemäß dem LTE-Standard Version 14, dem 4G-Standard und/oder dem 5G-Standard erfolgen. Darüber hinaus kann die Kommunikationseinheit unabhängig vom Mobilfunknetz bzw. der Verfügbarkeit ausreichender Kapazitäten des aktuell verfügbaren Mobilfunknetzes über eine andere Luftschnittstelle, beispielsweise WLAN, kommunizieren. Dazu kann IST-G5 bzw. IEEE 802.11p bei der Vehicle-to-Vehicle (V2V)-Kommunikation verwendet werden. Über die Kommunikationseinheit kann das Fahrzeug somit Daten anderer Kommunikationsteilnehmer empfangen bzw. Daten an andere Kommunikationsteilnehmer übermitteln.

Die Kommunikationseinheit ist eingerichtet, den erstellten Schnappschuss an das Backend zu übermitteln.

Vorteilhafterweise können so Daten mit Bezug auf einen durch einen Nutzer eines Fahrzeugs erkannten bzw. wahrgenommenen Fahrzeugfehler unabhängig von definierten bzw. nicht definierten Fehlercodes für ein oder mehrere elektronische bzw. elektrische Fahrzeugkomponenten und unabhängig davon, ob ein für einen definierten Fehlercode erforderlicher Schwellwert überschritten wird, erfasst und an das Backend zur weiteren Fehlererfassung bzw. Fehlerverarbeitung übermittelt werden. Dadurch werden bekannte Fahrzeugdiagnosesysteme erheblich verbessert, da Fehlerzustände von diesen oft nicht erkannt werden, obschon ein Fahrzeugnutzer einen Fehler bzw. Fehlerzustand wahrnimmt. Dadurch erhöht sich insbesondere die Sicherheit aller Verkehrsteilnehmer im Straßenverkehr.

Vorzugsweise umfasst der Schnappschuss der elektrischen und/oder elektronischen Fahrzeugkomponenten zusätzlich:
- eine Fahrzeugidentifikationsnummer des Fahrzeugs; und/oder
- einen Batteriestatus des Fahrzeugs; und/oder
- einen Wartungsverlauf des Fahrzeugs; und/oder
- eine geografische Position des Fahrzeugs; und/oder
- aktuelle Umweltbedingungen des Fahrzeugs; und/oder
- einen aktuellen Kilometerstand des Fahrzeugs; und/oder
- das Feedback über den Fahrzeugfehler.

Der aktuelle Status aller elektrischen und/oder elektronischen Fahrzeugkomponenten
umfasst einen aktuellen Status dieser zum Zeitpunkt der empfangenen Eingabe.

Die Fahrzeugidentifikationsnummer bzw. Vehicle Identification Number (VIN) des Fahrzeugs kann bei einer weiteren Verarbeitung des Schnappschusses, beispielsweise durch das Backend und/oder durch Servicemitarbeiter, zur Identifikation des betreffenden Fahrzeugs dienen.

Die geografische Position des Fahrzeugs kann beispielsweise durch eine fahrzeugseitige Positionsermittlungseinheit ermittelt werden. Die Positionsermittlungseinheit kann eingerichtet sein, aktuelle Positionsdaten des Fahrzeugs mithilfe eines Navigationssatellitensystems zu ermitteln bzw. zu erfassen. Bei dem Navigationssatellitensystem kann es sich um jedes gängige sowie künftige globale Navigationssatellitensystem bzw. Global Navigation Satellite System (GNSS) zur Positionsbestimmung und Navigation durch den Empfang der Signale von Navigationssatelliten und/oder Pseudoliten handeln. Beispielsweise kann es sich dabei handeln um das Global Positioning System (GPS), GLObal NAvigation Satellite System (GLONASS), Galileo, positioning system, und/oder BeiDou Navigation Satellite System, handeln. Im Beispiel von GPS kann die Positionsermittlungseinheit ein GPS-Modul umfassen, das eingerichtet ist, aktuelle GPS-Positionsdaten des Fahrzeugs zum Zeitpunkt der Eingabe über die Eingabeeinheit zu ermitteln.

Aktuelle Umweltbedingungen können beispielsweise eine aktuelle Außentemperatur, aktuelle Witterungsverhältnisse, Straßenverhältnisse etc. umfassen. Diese können auf aus dem Stand der Technik bekannte Weise mithilfe geeigneter Sensoren (z.B. Temperatursensor, Regensensor, Außenkameras etc.) zum Zeitpunkt der Eingabe über die Eingabeeinheit erfasst und in den Schnappschuss integriert werden.

Das Backend ist eingerichtet, den empfangenen Schnappschuss auszuwerten.

Das Auswerten des empfangenen Schnappschusses durch das Backend kann mithilfe geeigneter Machine-Learning-Algorithmen erfolgen. Beispielsweise kann unter Zuhilfenahme von Machine-Learning-Verfahren erstellten Modellen - z.B. durch überwachtes Lernen bzw. supervised learning oder unüberwachtes Lernen bzw. unsupervised learning - von einer Vielzahl an Fahrzeugen aus den bereits empfangenen Schnappschüssen eine bzw. mehrere für den Fahrzeugfehler verantwortliche elektronische und/oder elektrische Komponenten identifiziert werden. Darüber hinaus oder alternativ dazu kann - beispielsweise für den Fall, dass keine für den Fahrzeugfehler eindeutig verantwortliche elektronsiche und/oder elektrische Komponente(n) ermittelt werden kann - der Schnappschuss an einen Servicemitarbeiter bzw. Tele-Assistenz-Mitarbeiter übermittelt werden. Dieser kann sich beispielsweise zum Einholen weiterer Informationen mit Bezug auf den Fahrzeugfehler an den Nutzer des Fahrzeugs wenden und/oder einen Service-Termin für das Fahrzeug vorschlagen. Darüber hinaus oder alternativ dazu können die Schnappschuss-Daten auch von Werkstätten und/oder Problem-Management-Teams verwendet werden, um Problemlösungen zu finden. Vorteilhafterweise können somit auch externe Service-Mitarbeiter vom Schnappschuss profitieren. Somit kann nicht nur zeitnah und individuell auf den Fahrzeugfehler eingegangen werden, sondern es kann auch ein direkter Kommunikationskanal zum Nutzer des Fahrzeugs aufgebaut werden. Durch die Akkumulation der erfassten Schnappschüsse am Backend können - beispielsweise mithilfe geeigneter Algorithmen - Muster identifiziert werden, wodurch sich die Möglichkeit der technischen Verbesserung für eine Vielzahl an Fahrzeugen ergibt. So ergibt sich die Möglichkeit, bei einem so identifizierten Fahrzeugfehler weitere potentiell vom Fahrzeugfehler betroffene Fahrzeuge zu identifizieren, bei denen beispielsweise durch ein gezieltes Software-Update der Fahrzeugfehler behoben werden kann.

Gemäß einem zweiten Aspekt wird die zugrundeliegende Aufgabe durch ein Verfahren zur einfachen und dynamischen Verbesserung eines Fahrzeugdiagnosesystems gelöst, umfassend: Empfangen, über eine Eingabeeinheit eines Fahrzeugs, einer Eingabe mit Bezug auf einen Fahrzeugfehler;Erstellen, über eine Steuereinheit des Fahrzeugs, eines Schnappschusses der elektrischen und/oder elektronischen Fahrzeugkomponenten, wobei der Schnappschuss einen aktueller Status aller elektrischen und/oder elektronischen Fahrzeugkomponenten zum Zeitpunkt der empfangenen Eingabe und einen Zeitstempel des Zeitpunkts der empfangenen Eingabe über die Eingabeeinheit umfasst und weiterhin eine Softwareversion, die im Fahrzeug bzw. in den elektrischen und/oder elektronischen Fahrzeugkomponenten des Fahrzeugs installiert sind und ausgeführt werden, umfasst;Erfassen, über eine Feedbackeinheit des Fahrzeugs, die als Sprachdialogsystem eingerichtet ist, von Feedback über den Fahrzeugfehler;wobei das Erfassen des Feedbacks das Einteilen des Feedbacks in eine vorgegebene Problembeschreibungs-Struktur umfasst, wobei die Problembeschreibungsstruktur die folgenden Elemente umfasst:- Ort bzw. Fahrzeugteil, an dem das Problem wahrgenommen wird,- Umstände bzw. Bedingungen, unter denen das Problem auftritt, und- Häufigkeit des Auftretens des Problems;wobei die Feedbackeinheit eingerichtet ist, das Feedback zu verarbeiten und einen Schweregrad eines Problems aus dem Feedback abzuleiten;Integrieren des erfassten Feedbacks in den Schnappschuss; und Übermitteln, über eine Kommunikationseinheit des Fahrzeugs, des erstellten Schnappschusses an ein Backend; Auswerten des empfangenen Schnappschusses zur Fehlerdiagnose im Backend.

Vorzugsweise umfasst der Schnappschuss der elektrischen und/oder elektronischen Fahrzeugkomponenten zusätzlich:
- eine Fahrzeugidentifikationsnummer des Fahrzeugs; und/oder
- einen Batteriestatus des Fahrzeugs; und/oder
- einen Wartungsverlauf des Fahrzeugs; und/oder
- eine geografische Position des Fahrzeugs; und/oder
- aktuelle Umweltbedingungen des Fahrzeugs; und/oder
- einen aktuellen Kilometerstand des Fahrzeugs; und/oder
- das Feedback über den Fahrzeugfehler.
- eine Softwareversion, die im Fahrzeug bzw. in den elektrischen und/oder elektronischen Fahrzeugkomponenten des Fahrzeugs installiert sind und ausgeführt werden.

Das Backend ist eingerichtet, den empfangenen Schnappschuss auszuwerten.

Diese und andere Aufgaben, Merkmale und Vorteile der vorliegenden Erfindung werden aus dem Studium der folgenden detaillierten Beschreibung bevorzugter Ausführungsformen und der beiliegenden Figuren verdeutlicht. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt schematisch ein System zur einfachen und dynamischen Verbesserung eines Fahrzeugdiagnosesystems;
- **Fig. 2**: zeigt ein beispielhaftes Verfahren zur einfachen und dynamischen Verbesserung eines Fahrzeugdiagnosesystems;
- **Fig. 3**: zeigt einen beispielhaften Schnappschuss;
- **Fig. 4**: zeigt beispielhaft eine Eingabe mit Bezug auf einen Fahrzeugfehler und eines Feedbacks mit Bezug auf den Fahrzeugfehler.

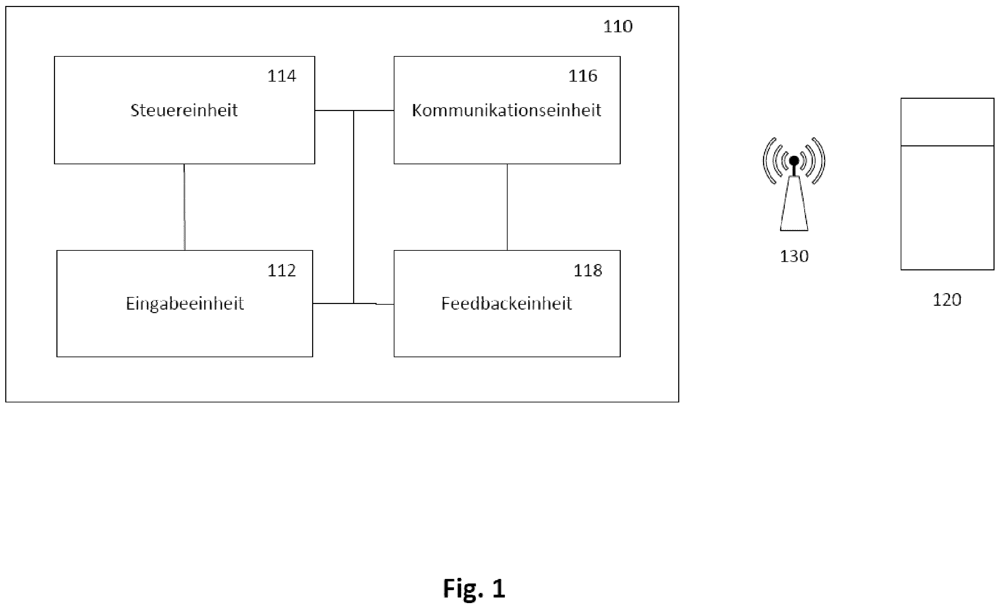

**Figur 1** zeigt schematisch ein System 100 zur einfachen und dynamischen Verbesserung eines Fahrzeugdiagnosesystems im Fahrzeug 110.

Das System 100 umfasst zumindest ein Fahrzeug 110. Das Fahrzeug 110 umfasst eine Eingabeeinheit 112. Die Eingabeeinheit 112 kann beispielsweise Teil eines Infotainmentsystems des Fahrzeugs 110 sein. Die Eingabeeinheit 112 kann mittels Sprachbedienung und/oder Touch-Bedienung und/oder Tastenbedienung und/oder jede beliebige weitere Bedienmöglichkeit bedient werden. Die Eingabeeinheit 112 ist eingerichtet, eine Eingabe mit Bezug auf einen Fahrzeugfehler zu empfangen. Beispielsweise kann ein Nutzer des Fahrzeugs 110 über bei Erkennung eines Fahrzeugfehlers mit Bezug auf eine elektronische und/oder elektrische Komponente des Fahrzeugs 110 über die Eingabeeinheit 112 eine Eingabe mit Bezug auf den Fahrzeugfehler tätigen. Dies kann auf sehr komfortable Weise erfolgen. Beispielsweise kann eine im Fahrzeug vorinstallierte Applikation bzw. App bereitgestellt werden, mittels derer durch eine Spracheingabe und/oder eine Touch-Eingabe über ein Touchscreen und/oder eine andere geeignete Eingabe der erkannte Fahrzeugfehler eingegeben werden.

Das Fahrzeug 110 umfasst eine Steuereinheit 114. Die Steuereinheit 114 ist eingerichtet, nach empfangener Eingabe mit Bezug auf den Fahrzeugfehler über die Eingabeeinheit 112 einen Schnappschuss 300 der elektrischen und/oder elektronischen Fahrzeugkomponenten zu erstellen. Der Schnappschuss 300 kann eine geeignete Datenstruktur sein und einen aktuellen Zustand der elektrischen und/oder elektronischen Fahrzeugkomponenten zum Zeitpunkt der empfangenen Eingabe mit Bezug auf den Fahrzeugfehler über die Eingabeeinheit 112 umfassen. Dies ist besonders vorteilhaft, da der Nutzer des Fahrzeugs 110 keine Information über die elektrische(n) und/oder elektronische(n) Komponente, die für den wahrgenommenen Fahrzeugfehler verantwortlich ist/sind, haben kann. Somit wird ein Schnappschuss 300 sämtlicher elektrischer und/oder elektronischer Fahrzeugkomponenten zum Zeitpunkt der Wahrnehmung des Fahrzeugfehlers durch den Nutzer des Fahrzeugs 110 erstellt, der im späteren Verlauf analysiert werden kann. Die elektrischen und/oder elektronischen Komponenten des Fahrzeugs 110 können die gesamte Fahrzeug- bzw. Automobilelektronik umfassen, also den gesamten Bereich der Elektronik im Fahrzeug 110. Diese können sämtliche Steuergeräte, die im Fahrzeug 110 verteilt sind, umfassen. Die Steuergeräte können Steuergeräte mit Bezug auf das Kombiinstrument im Fahrzeug 110, mit Bezug auf die Motorsteuerung im Fahrzeug 110, mit Bezug auf Fahrerassistenzsysteme im Fahrzeug 110, mit Bezug auf Airbagsysteme im Fahrzeug, mit Bezug auf Alarmanlagen im Fahrzeug 110, mit Bezug auf Multimediasysteme im Fahrzeug etc. umfassen.

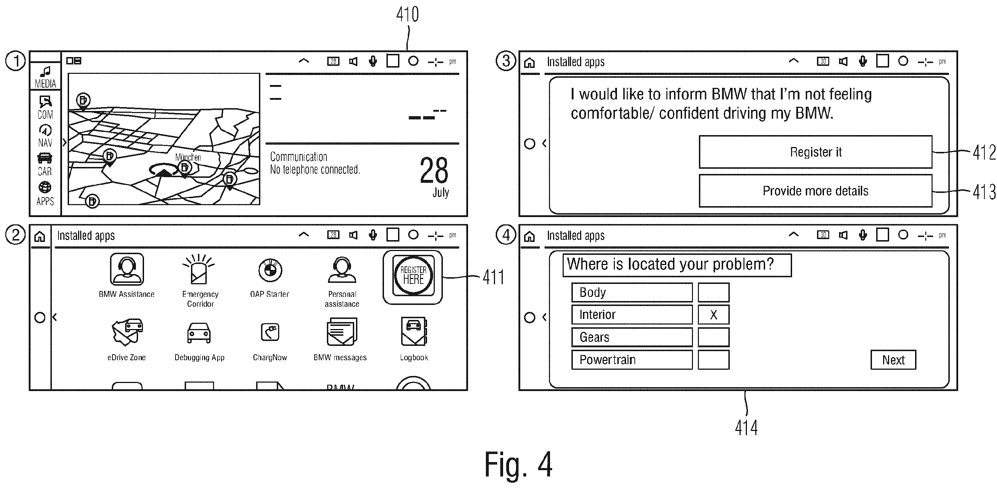

Das Fahrzeug 110 kann zudem eine Feedbackeinheit 118 umfassen. Die Feedbackeinheit 118 ist eingerichtet, vom Nutzer bzw. Fahrer des Fahrzeugs 110 weitere Informationen bzw. Daten mit Bezug auf den Fahrzeugfehler zu erfassen, wie weiter unten mit Bezug auf Figur 4 näher erläutert. Beispielsweise kann ein vordefinierter Dialog über eine Ein- und Ausgabeeinheit 112 im Fahrzeug 110, beispielsweise das Infotainmentsystem des Fahrzeugs 110, durchgeführt werden. Somit können weitere, insbesondere durch den Nutzer bzw. Fahrer des Fahrzeugs 110 wahrgenommene Störungen mit Bezug auf den wahrgenommenen Fahrzeugfehler erfasst werden. Das durch die Feedbackeinheit 118 erfasste Feedback bzw. die durch die Feedbackeinheit erfassten Feedbackdaten kann bzw. können in den Schnappschuss 300 integriert werden.

Beispielsweise kann die Feedbackeinheit 118 ein Sprachdialogsystem umfassen, um das Feedback des Nutzers bzw. Fahrers des Fahrzeugs 110 mit Bezug auf die wahrgenommene Störung mit Bezug auf den wahrgenommenen Fahrzeugfehler umfassen. Ein Sprachdialogsystem ist im Rahmen dieses Dokuments ein System, über das Personen Dialoge in natürlicher Sprache führen und so die natürliche Sprache als Ein-und/oder Ausgabemedium nutzen können. Das Erfassen des Feedbacks über das Sprachdialogsystem, welches Teil des Infotainmentsystems des Fahrzeugs 110 sein kann, ist besonders vorteilhaft, da das Feedback eingeholt werden kann, ohne dass der Nutzer bzw. Fahrer des Fahrzeugs Bedienelemente zur Eingabe des Feedbacks nutzen muss. Dadurch wird vermieden, dass der Nutzer bzw. Fahrer des Fahrzeugs vom Straßenverkehr abgelenkt wird. Darüber hinaus oder alternativ dazu kann die Feedbackeinheit 118 eine Ein- und Ausgabeeinheit umfassen, die Teil des Infotainmentsystem des Fahrzeugs 110 sein kann. Hier kann beispielsweise durch Touch-Eingabe, Eingabe über ein Bedienelement etc. über ein Fenster Feedback über den Fahrzeugfehler erfasst werden.

Das Erfassen des Feedbacks kann das einteilen des Feedbacks in eine vorgegebenen bzw. vorgebbaren Problembeschreibungs-Struktur durch die Feedbackeinheit 118 umfassen. Die Problembeschreibungsstruktur kann ein oder mehrere der folgenden Elemente umfassen:
- Ort bzw. Fahrzeugteil, an dem das Problem wahrgenommen wird, z.B. Bremse, Getriebe, etc.
- Anzeichen bzw. Anhaltspunkte mit Bezug auf das Problem, z.B. Rauchentwicklung, Geräusche, etc.
- Umstände bzw. Bedingungen, unter denen das Problem auftritt, z.B. beim Motorstart, beim Bremsvorgang, etc.
- Häufigkeit des Auftretens des Problems.

Aus der Verarbeitung des Feedbacks kann die Feedbackeinheit 118 die Schwere bzw. Schweregrad des Problems ableiten, wobei der Schweregrad in verschiedene Bereiche klassifiziert werden kann, z.B. schwerwiegend, wenn das Wohl der Fahrzeuginsassen und/oder anderer Verkehrsteilnehmer betroffen wird oder leicht, wenn es sich um eine Störung der Verkehrslageinformationen im Navigationsmodul des Fahrzeugs 110 handelt.

Beispiele für die Bereitstellung des Feedbacks durch einen Nutzer bzw. Fahrer des Fahrzeugs 110 über ein Sprachdialogsystem bei einem Problem mit Bezug Verkehrslageinformationen können sein:
- "Es liegt eine Straßensperrung vor, die nicht angezeigt wurde";
- "Warum wurde diese Straßensperrung nicht angezeigt";
- "Warum wurde dieser Unfall nicht angezeigt";
- "Warum hast du diesen Unfall nicht vorausgesehen"; etc.

Beispiele für die Bereitstellung des Feedbacks durch einen Nutzer bzw. Fahrer des Fahrzeugs 110 über ein Sprachdialogsystem mit Bezug auf ein mechanisches Problem können sein:
- "Immer wenn ich das Fahrzeug starte, macht es komische Geräusche";
- "Immer wenn ich den Motor anlasse, höre ich komische Geräusche";
- "Immer wenn ich das Fahrzeug stoppe macht der Motor klopfende Geräusche";
- "Immer, wenn ich den Motor ausmache, macht der Motor klopfende Geräusche";
- "Während der Fahrt macht der Motor manchmal röchelnde Geräusche"; etc.

So kann die Feedbackeinheit 118 aus dem Feedback "Immer, wenn ich den Motor ausmache, macht der Motor klopfende Geräusche" folgendes ableiten:
- Ort bzw. Fahrzeugteil, an dem das Problem wahrgenommen wird: Motor;
- Anzeichen bzw. Anhaltspunkte mit Bezug auf das Problem: klopfende Geräusche;
- Umstände bzw. Bedingungen, unter denen das Problem auftritt: beim Motor-Stopp;
- Häufigkeit des Auftretens des Problems: bei jedem Motor-Stopp;
- Schweregrad des Problems: Mittelschweres Problem, eine Werkstatt sollte demnächst aufgesucht werden.

Analog zum vorgenannten Beispiel können auch über andere Eingabemöglichkeiten eingegebene Problembeschreibungen durch die Feedbackeinheit 118 klassifiziert werden.

Vorteilhafter Weise kann so zusätzlich zu den technischen Zustandsdaten der elektrischen und/oder elektronischen Komponenten des Fahrzeugs 110 die durch den Nutzer bzw. Fahrer des Fahrzeugs 110 wahrgenommene Störung mit Bezug auf den Fahrzeugfehler erfasst, in den Schnappschuss 300 integriert und mit an ein Backend 120 (siehe unten) zur möglichen Fehlerdiagnose übermittelt werden. Die Wahrnehmung des Nutzers bzw. Fahrers des Fahrzeugs mit Bezug auf den Fahrzeugfehler bietet einen wesentlichen Vorteil bei der Identifizierung des Fahrzeugfehlers und/oder der Ursachen für den Fahrzeugfehler im Vergleich zu konventionellen Fahrzeugdiagnosesystemen. Durch die Klassifikation des Feedbacks über die Feedbackeinheit 118 kann eine einheitliche Datenstruktur zur Problembeschreibung realisiert und an das Backend 120 zur möglichen Fehlerdiagnose übermittelt werden. Vorteilhafterweise können so der Schnappschuss 300 und das Feedback in eine einheitliche Gesamt-Datenstruktur zusammengefügt bzw. gemerged werden.

Der Schnappschuss 300 der elektrischen und/oder elektronischen Fahrzeugkomponenten kann umfassen:
- einen aktuellen Status 301 aller elektrischen und/oder elektronischen Fahrzeugkomponenten; und/oder
- eine Fahrzeugidentifikationsnummer bzw. Vehicle Identification Number (VIN) 302 des Fahrzeugs 110; und/oder
- einen Batteriestatus 303 des Fahrzeugs 110; und/oder
- einen Wartungsverlauf 304 des Fahrzeugs 110; und/oder
- eine geografische Position 305 des Fahrzeugs 110; und/oder
- aktuelle Umweltbedingungen 306 des Fahrzeugs 110; und/oder
- einen aktuellen Kilometerstand 307 des Fahrzeugs 110; und/oder
- das Feedback über den Fahrzeugfehler 308; und/oder
- einen Zeitstempel 309 des Zeitpunkts der empfangenen Eingabe über die Eingabeeinheit 112 des Fahrzeugs 110; und/oder
- eine Softwareversion 310, die im Fahrzeug 110 bzw. in den elektrischen und/oder elektronischen Fahrzeugkomponenten des Fahrzeugs installiert sind und ausgeführt werden.

Der aktuelle Status 301 aller elektrischen und/oder elektronischen Fahrzeugkomponenten umfasst insbesondere einen aktuellen Status dieser zum Zeitpunkt der empfangenen Eingabe mit Bezug auf den Fahrzeugfehler.

Die Fahrzeugidentifikationsnummer bzw. Vehicle Identification Number (VIN) 302 des Fahrzeugs 110 kann bei einer weiteren Verarbeitung des Schnappschusses, beispielsweise durch das Backend 120 und/oder durch Servicemitarbeiter, zur Identifikation des betreffenden Fahrzeugs dienen.

Die geografische Position 305 des Fahrzeugs 110 kann beispielsweise durch eine fahrzeugseitige Positionsermittlungseinheit (nicht gezeigt) ermittelt werden. Die Positionsermittlungseinheit kann eingerichtet sein, aktuelle Positionsdaten des Fahrzeugs 110 mithilfe eines Navigationssatellitensystems zu ermitteln bzw. zu erfassen. Bei dem Navigationssatellitensystem kann es sich um jedes gängige sowie künftige globale Navigationssatellitensystem bzw. Global Navigation Satellite System (GNSS) zur Positionsbestimmung und Navigation durch den Empfang der Signale von Navigationssatelliten und/oder Pseudoliten handeln. Beispielsweise kann es sich dabei handeln um das Global Positioning System (GPS), GLObal NAvigation Satellite System (GLONASS), Galileo, positioning system, und/oder BeiDou Navigation Satellite System, handeln. Im Beispiel von GPS kann die Positionsermittlungseinheit ein GPS-Modul umfassen, das eingerichtet ist, aktuelle GPS-Positionsdaten des Fahrzeugs 110 zum Zeitpunkt der Eingabe über die Eingabeeinheit 112 zu ermitteln.

Aktuelle Umweltbedingungen 306 können beispielsweise eine aktuelle Außentemperatur, aktuelle Witterungsverhältnisse, Straßenverhältnisse etc. umfassen. Diese können auf aus dem Stand der Technik bekannte Weise mithilfe geeigneter Sensoren (z.B. Temperatursensor, Regensensor, Außenkameras etc.) zum Zeitpunkt der Eingabe über die Eingabeeinheit 112 erfasst und in den Schnappschuss 300 integriert werden.

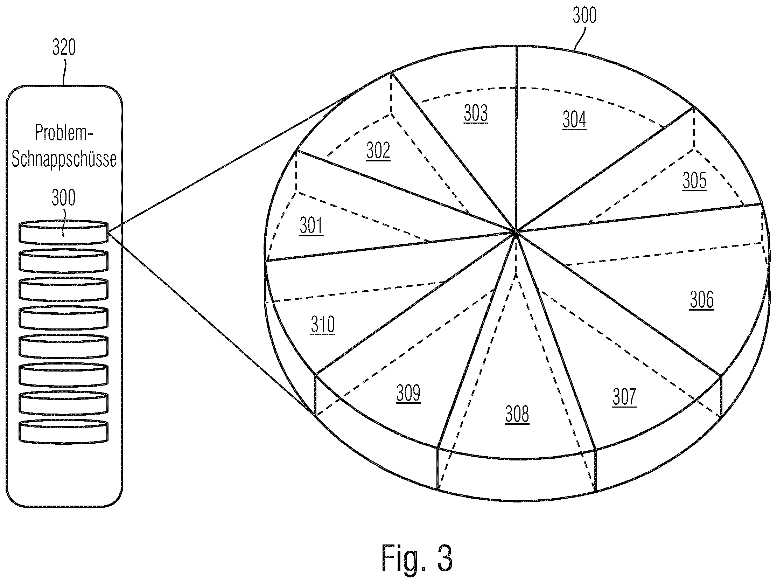

Ein beispielhafter Schnappschuss 300 wird weiter unten mit Bezug auf Figur 3 näher erläutert.

Das System 100 umfasst ein Backend 120. Das Backend 120 kann zumindest einen Backend-Server umfassen und/oder Teil von Cloud-Computing bzw. einer IT-Infrastruktur, die über das Internet Speicherplatz, Rechenleistung und/oder Anwendungssoftware als Dienstleistung zur Verfügung stellt (Service Provider), sein.

Das Fahrzeug 110 umfasst eine Kommunikationseinheit 116. Die Kommunikationseinheit 116 kann eine im Fahrzeug 110 angeordnete Kommunikationseinheit 116 sein, die eingerichtet ist, eine Kommunikationsverbindung mit anderen Kommunikationsteilnehmern, beispielsweise dem Backend 120 und/oder einem mobilen Endgerät, aufzubauen. Die Kommunikationseinheit 116 kann ein Teilnehmeridentitätsmodul bzw. ein Subscriber Identity Module bzw. eine SIM-Karte umfassen, welche(s) dazu dient, eine Kommunikationsverbindung über ein Mobilfunksystem aufzubauen. Das Teilnehmeridentitätsmodul identifiziert dabei die Kommunikationseinheit 116 eindeutig im Mobilfunknetz. Bei der Kommunikationsverbindung kann es sich um eine Datenverbindung (z.B. Paketvermittlung) und/oder um eine leitungsgebundene Kommunikationsverbindung (z.B. Leitungsvermittlung) handeln. Die Kommunikation kann nach dem Cellular Vehicle To X (C-V2X)-Paradigma gemäß dem LTE-Standard Version 14, dem 4G-Standard und/oder dem 5G-Standard erfolgen. Darüber hinaus kann die Kommunikationseinheit 116 unabhängig vom Mobilfunknetz bzw. der Verfügbarkeit ausreichender Kapazitäten des aktuell verfügbaren Mobilfunknetzes über eine andere Luftschnittstelle, beispielsweise WLAN, kommunizieren. Dazu kann IST-G5 bzw. IEEE 802.11p bei der Vehicle-to-Vehicle (V2V)-Kommunikation verwendet werden. Über die Kommunikationseinheit 116 kann das Fahrzeug somit Daten anderer Kommunikationsteilnehmer empfangen bzw. Daten an andere Kommunikationsteilnehmer übermitteln.

Die Kommunikationseinheit 116 ist eingerichtet, den erstellten Schnappschuss an das Backend 120 zu übermitteln.

Vorteilhafterweise können so Daten mit Bezug auf einen durch einen Nutzer eines Fahrzeugs 110 erkannten bzw. wahrgenommenen Fahrzeugfehler unabhängig von definierten bzw. nicht definierten Fehlercodes für ein oder mehrere elektronische bzw. elektrische Fahrzeugkomponenten und unabhängig davon, ob ein für einen definierten Fehlercode erforderlicher Schwellwert überschritten wird, erfasst und an das Backend 120 zur weiteren Fehlererfassung bzw. Fehlerverarbeitung übermittelt werden. Dadurch werden bekannte Fahrzeugdiagnosesysteme erheblich verbessert, da Fehlerzustände von diesen oft nicht erkannt werden, obschon ein Fahrzeugnutzer einen Fehler bzw. Fehlerzustand wahrnimmt. Dadurch erhöht sich insbesondere die Sicherheit aller Verkehrsteilnehmer im Straßenverkehr.

Das Backend 120 kann eingerichtet sein, den empfangenen Schnappschuss auszuwerten.

Das Auswerten des empfangenen Schnappschusses durch das Backend 120 kann mithilfe geeigneter Machine-Learning-Algorithmen erfolgen. Beispielsweise kann unter Zuhilfenahme von Machine-Learning-Verfahren erstellten Modellen - z.B. durch überwachtes Lernen bzw. supervised learning oder unüberwachtes Lernen bzw. unsupervised learning - von einer Vielzahl an Fahrzeugen 110 aus den bereits empfangenen Schnappschüssen 300 eine bzw. mehrere für den Fahrzeugfehler verantwortliche elektronische und/oder elektrische Komponente(n) identifiziert werden. Darüber hinaus oder alternativ dazu kann - beispielsweise für den Fall, dass keine für den Fahrzeugfehler eindeutig verantwortliche elektronsiche und/oder elektrische Komponente(n) ermittelt werden kann - der Schnappschuss 300 an einen Servicemitarbeiter bzw. Tele-Assistenz-Mitarbeiter übermittelt werden. Dieser kann sich beispielsweise zum Einholen weiterer Informationen mit Bezug auf den Fahrzeugfehler an den Nutzer des Fahrzeugs 110 wenden und/oder einen Service-Termin für das Fahrzeug 110 vorschlagen. Darüber hinaus oder alternativ dazu können die Schnappschuss-Daten auch von Werkstätten und/oder Problem-Management-Teams verwendet werden, um Problemlösungen zu finden. Vorteilhafterweise können somit auch externe Service-Mitarbeiter vom Schnappschuss profitieren. Somit kann nicht nur zeitnah und individuell auf den Fahrzeugfehler eingegangen werden, sondern es kann auch ein direkter Kommunikationskanal zum Nutzer des Fahrzeugs 110 aufgebaut werden. Durch die Akkumulation der erfassten Schnappschüsse am Backend 120 können - beispielsweise mithilfe geeigneter Algorithmen - Muster identifiziert werden, wodurch sich die Möglichkeit der technischen Verbesserung für eine Vielzahl an Fahrzeugen 110 ergibt. So ergibt sich die Möglichkeit, bei einem so identifizierten Fahrzeugfehler weitere potentiell vom Fahrzeugfehler betroffene Fahrzeuge 110 zu identifizieren, bei denen beispielsweise durch ein gezieltes Software-Update der Fahrzeugfehler behoben werden kann.

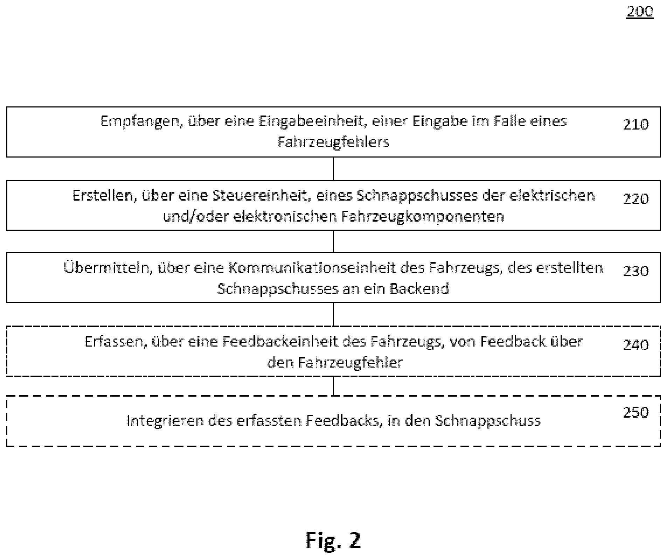

**Figur 2** zeigt ein Verfahren 200 zur einfachen und dynamischen Verbesserung eines Fahrzeugdiagnosesystems, dass von einem System 100 wie mit Bezug auf Figur 1 beschrieben ausgeführt werden kann.

Das Verfahren 200 umfasst:
Empfangen 210, über eine Eingabeeinheit 112 eines Fahrzeugs 110, einer Eingabe mit Bezug auf einen Fahrzeugfehler;
Erstellen 220, über eine Steuereinheit 114 des Fahrzeugs 110, eines Schnappschusses 300 der elektrischen und/oder elektronischen Fahrzeugkomponenten;
Erfassen 240, über eine Feedbackeinheit 118 des Fahrzeugs 110, von Feedback über den Fahrzeugfehler;
   wobei das Erfassen des Feedbacks das Einteilen des Feedbacks in eine vorgegebene Problembeschreibungs-Struktur umfasst;
   wobei die Feedbackeinheit 118 eingerichtet ist, das Feedback zu verarbeiten und einen Schweregrad eines Problems aus dem Feedback abzuleiten; und Integrieren 250 des erfassten Feedbacks in den Schnappschuss 300; und
Übermitteln 230, über eine Kommunikationseinheit 116 des Fahrzeugs 110, des erstellten Schnappschusses 300 an ein Backend 120.

Der Schnappschuss 300 der elektrischen und/oder elektronischen Fahrzeugkomponenten kann umfassen:
- einen aktuellen Status 301 aller elektrischen und/oder elektronischen Fahrzeugkomponenten; und/oder
- eine Fahrzeugidentifikationsnummer 302 des Fahrzeugs 110; und/oder
- einen Batteriestatus 303 des Fahrzeugs 110; und/oder
- einen Wartungsverlauf 304 des Fahrzeugs 110; und/oder
- eine geografische Position 305 des Fahrzeugs 110; und/oder
- aktuelle Umweltbedingungen 306 des Fahrzeugs 110; und/oder
- einen aktuellen Kilometerstand 307 des Fahrzeugs 110; und/oder
- das Feedback 308 über den Fahrzeugfehler; und/oder
- einen Zeitstempel 309 des Zeitpunkts der empfangenen Eingabe über die Eingabeeinheit 112; und/oder
- eine Softwareversion 310, die im Fahrzeug 110 bzw. in den elektrischen und/oder elektronischen Fahrzeugkomponenten des Fahrzeugs 110 installiert sind und ausgeführt werden.

Das Backend 120 kann eingerichtet sein, den empfangenen Schnappschuss 300 auszuwerten.

**Figur 3** zeigt einen beispielhaften Schnappschuss 300 wie mit Bezug auf Figuren 1 und 2 beschrieben.

Der beispielhafte Schnappschuss 300 umfasst den einen aktuellen Status 301 aller elektrischen und/oder elektronischen Fahrzeugkomponenten, eine

Fahrzeugidentifikationsnummer 302 des Fahrzeugs 110, einen Batteriestatus 303 des Fahrzeugs 110, einen Wartungsverlauf 304 des Fahrzeugs 110, eine geografische Position 305 des Fahrzeugs 110, aktuelle Umweltbedingungen 306 des Fahrzeugs 110, einen aktuellen Kilometerstand 307 des Fahrzeugs 110, das Feedback 308 über den Fahrzeugfehler, einen Zeitstempel 309 des Zeitpunkts der empfangenen Eingabe über die Eingabeeinheit 112 und eine Softwareversion 310, die im Fahrzeug 110 bzw. in den elektrischen und/oder elektronischen Fahrzeugkomponenten des Fahrzeugs 110 installiert sind und ausgeführt wird bzw. werden.

Der Schnappschuss 300 ist zusammen mit weiteren (Problem-) Schnappschüssen des Fahrzeugs 110 und/oder einer Vielzahl weiterer Fahrzeuge in einer Speichereinheit 320 hinterlegt. Das Backend 120 kann die Speichereinheit 320 umfassen bzw. auf diese zugreifen, um den bzw. die Schnappschüsse wie mit Bezug auf Figur 1 beschrieben zu verarbeiten.

**Figur 4** zeigt beispielhaft eine Eingabe mit Bezug auf einen Fahrzeugfehler und eines Feedbacks mit Bezug auf den Fahrzeugfehler, wie mit Bezug auf Figuren 1 und 2 beschrieben. Das erfasste Feedback kann durch die Feedbackeinheit 118 wie mit Bezug auf Figur 1 beschrieben klassifiziert und zusammen mit dem Schnappschuss 300 zu einer einzigen, einheitlichen Datenstruktur gemerged werden.

Fenster 410 zeigt eine Ein- und Ausgabeeinheit 112 des Fahrzeugs 110, die das Infotainmentsystem des Fahrzeugs darstellen kann. Fenster 420 zeigt einen Bereich, in dem im Fahrzeug 110 vorinstallierte Apps über die Ein- und Ausgabeeinheit 112 angezeigt werden. Diese umfassen eine App 411, die zur Eingabe mit Bezug auf den Fahrzeugfehler - wie mit Bezug auf Figur 1 beschrieben, dient.

Nach Aktivierung der App 411 - beispielsweise durch Spracheingabe, Touch-Eingabe, Eingabe über ein Bedienelement etc. Wird Fenster 412 geöffnet. Durch Aktivierung der möglichen Eingabe 412 "Register it" bzw. "registrieren" (durch eine der vorgenannten geeigneten Eingabemöglichkeiten) wird der Schnappschuss 300 erstellt. Dies ermöglicht es dem Nutzer des Fahrzeugs auf besonders schnelle, effiziente und unkomplizierte Weise einen Fahrzeugfehler zu melden.

Durch Aktivierung der möglichen Eingabe 413 "Provide more details" bzw. "Bereitstellen weiterer Informationen" (durch eine der vorgenannten geeigneten Eingabemöglichkeiten) wird die Feedbackeinheit 118 aktiviert, um Feedback über den Fahrzeugfehler zu erfassen, wie mit Bezug auf Figur 1 beschrieben. In diesem Fall werden weitere Informationen abgefragt, angefangen mit der Abfrage, wo im Fahrzeug das Problem aufgetreten ist. Das Einholen des Feedbacks kann auf flexible Weise erweitert werden.

## Patentansprüche

1. System (100) zur einfachen und dynamischen Verbesserung eines Fahrzeugdiagnosesystems umfassend zumindest ein Fahrzeug (110), wobei das Fahrzeug (110) umfasst:
eine Eingabeeinheit (112), die eingerichtet ist, eine Eingabe mit Bezug auf einen Fahrzeugfehler zu empfangen;
eine Steuereinheit (114), die eingerichtet ist, nach empfangener Eingabe über die Eingabeeinheit (112) einen Schnappschuss (300) der elektrischen und/oder elektronischen Fahrzeugkomponenten zu erstellen, wobei der Schnappschuss (300) einen aktuellen Status aller elektrischen und/oder elektronischen Fahrzeugkomponenten zum Zeitpunkt der empfangenen Eingabe und einen Zeitstempel (309) des Zeitpunkts der empfangenen Eingabe über die Eingabeeinheit (112) umfasst und weiterhin eine Softwareversion (310), die im Fahrzeug (110) bzw. in den elektrischen und/oder elektronischen Fahrzeugkomponenten des Fahrzeugs installiert sind und ausgeführt werden, umfasst,
eine Feedbackeinheit (118), wobei die Feedbackeinheit als Sprachdialogsystem eingerichtet ist, Feedback über den Fahrzeugfehler zu erfassen;
wobei das Erfassen des Feedbacks das Einteilen des Feedbacks in eine vorgegebene Problembeschreibungs-Struktur umfasst, wobei die Problembeschreibungsstruktur die folgenden Elemente umfasst:
- Ort bzw. Fahrzeugteil, an dem das Problem wahrgenommen wird,
- Umstände bzw. Bedingungen, unter denen das Problem auftritt, und
- Häufigkeit des Auftretens des Problems,
wobei die Feedbackeinheit (118) eingerichtet ist, das Feedback zu verarbeiten und einen Schweregrad eines Problems aus dem Feedback abzuleiten; und
wobei das erfasste Feedback in den Schnappschuss (300) integriert wird; und eine Kommunikationseinheit (116), die eingerichtet ist, den erstellten Schnappschuss (300) an ein Backend (120) zu übermitteln;
wobei das Backend (120) ausgebildet ist, um den empfangenen Schnappschuss zur Fehlerdiagnose auszuwerten.

2. System (100) gemäß Anspruch 1, wobei der Schnappschuss (300) der elektrischen und/oder elektronischen Fahrzeugkomponenten umfasst:
- eine Fahrzeugidentifikationsnummer (302) des Fahrzeugs (110); und/oder
- einen Batteriestatus (303) des Fahrzeugs (110); und/oder
- einen Wartungsverlauf (304) des Fahrzeugs (110); und/oder
- eine geografische Position (305) des Fahrzeugs (110); und/oder
- aktuelle Umweltbedingungen (306) des Fahrzeugs (110); und/oder
- einen aktuellen Kilometerstand (307) des Fahrzeugs (110); und/oder
- das Feedback (308) über den Fahrzeugfehler.

3. Verfahren (200) zur einfachen und dynamischen Verbesserung eines Fahrzeugdiagnosesystems, umfassend:
Empfangen (210), über eine Eingabeeinheit (112) eines Fahrzeugs (110), einer Eingabe mit Bezug auf einen Fahrzeugfehler;
Erstellen (220), über eine Steuereinheit (114) des Fahrzeugs (110), eines Schnappschusses (300) der elektrischen und/oder elektronischen Fahrzeugkomponenten, wobei der Schnappschuss (300) einen aktueller Status aller elektrischen und/oder elektronischen Fahrzeugkomponenten zum Zeitpunkt der empfangenen Eingabe und einen Zeitstempel (309) des Zeitpunkts der empfangenen Eingabe über die Eingabeeinheit (112) umfasst und weiterhin eine Softwareversion (310), die im Fahrzeug (110) bzw. in den elektrischen und/oder elektronischen Fahrzeugkomponenten des Fahrzeugs installiert sind und ausgeführt werden, umfasst;
Erfassen (240), über eine Feedbackeinheit (118) des Fahrzeugs (110), die als Sprachdialogsystem eingerichtet ist, von Feedback über den Fahrzeugfehler;
wobei das Erfassen des Feedbacks das Einteilen des Feedbacks in eine vorgegebene Problembeschreibungs-Struktur umfasst, wobei die Problembeschreibungsstruktur die folgenden Elemente umfasst:
- Ort bzw. Fahrzeugteil, an dem das Problem wahrgenommen wird,
- Umstände bzw. Bedingungen, unter denen das Problem auftritt, und
- Häufigkeit des Auftretens des Problems;
wobei die Feedbackeinheit (118) eingerichtet ist, das Feedback zu verarbeiten und einen Schweregrad eines Problems aus dem Feedback abzuleiten;
Integrieren (250) des erfassten Feedbacks in den Schnappschuss (300); und
Übermitteln (230), über eine Kommunikationseinheit (116) des Fahrzeugs (110), des erstellten Schnappschusses (300) an ein Backend (120);
Auswerten des empfangenen Schnappschusses zur Fehlerdiagnose im Backend (120).

4. Verfahren (200) gemäß Anspruch 3, wobei der Schnappschuss (300) der elektrischen und/oder elektronischen Fahrzeugkomponenten umfasst:
- eine Fahrzeugidentifikationsnummer (302) des Fahrzeugs (110); und/oder
- einen Batteriestatus (303) des Fahrzeugs (110); und/oder
- einen Wartungsverlauf (304) des Fahrzeugs (110); und/oder
- eine geografische Position (305) des Fahrzeugs (110); und/oder
- aktuelle Umweltbedingungen (306) des Fahrzeugs (110); und/oder
- einen aktuellen Kilometerstand (307) des Fahrzeugs (110); und/oder -das Feedback (308) über den Fahrzeugfehler.

## Claims

1. System (100) for simply and dynamically improving a vehicle diagnostic system comprising at least one vehicle (110), wherein the vehicle (110) comprises:
an input unit (112) configured to receive an input with respect to a vehicle fault;
a control unit (114) configured to create a snapshot (300) of the electrical and/or electronic vehicle components after the input has been received via the input unit (112), wherein the snapshot (300) comprises a current status of all the electrical and/or electronic vehicle components at the time of the input received and
a time stamp (309) of the time of the input received via the input unit (112) and furthermore comprises a software version (310) installed and executed in the vehicle (110) or in the electrical and/or electronic vehicle components of the vehicle,
a feedback unit (118), wherein the feedback unit is configured as a voice dialogue system to acquire feedback about the vehicle fault;
wherein acquiring the feedback comprises categorizing the feedback in a predefined problem description structure,
wherein the problem description structure comprises the following elements:
- location or part of the vehicle where the problem is perceived,
- circumstances or conditions under which the problem occurs, and
- frequency of occurrence of the problem,
wherein the feedback unit (118) is configured to process the feedback and to derive a degree of severity of a problem from the feedback; and
wherein the acquired feedback is integrated into the snapshot (300); and
a communication unit (116) configured to communicate the created snapshot (300) to a backend (120);
wherein the backend (120) is configured to evaluate the received snapshot for fault diagnosis.

2. System (100) according to Claim 1, wherein the snapshot (300) of the electrical and/or electronic vehicle components comprises:
- a vehicle identification number (302) of the vehicle (110); and/or
- a battery status (303) of the vehicle (110); and/or
- a maintenance history (304) of the vehicle (110); and/or
- a geographical position (305) of the vehicle (110); and/or
- current environmental conditions (306) of the vehicle (110); and/or
- a current odometer reading (307) of the vehicle (110); and/or
- the feedback (308) about the vehicle fault.

3. Method (200) for simply and dynamically improving a vehicle diagnostic system, comprising:
receiving (210) via an input unit (112) of a vehicle (110), an input with respect to a vehicle fault;
creating (220), via a control unit (114) of the vehicle (110), a snapshot (300) of the electrical and/or electronic vehicle components,
wherein the snapshot (300) comprises a current status of all the electrical and/or electronic vehicle components at the time of the input received and a time stamp (309) of the time of the input received via the input unit (112) and furthermore comprises a software version (310) installed and executed in the vehicle (110) or in the electrical and/or electronic vehicle components of the vehicle;
acquiring (240), via a feedback unit (118) of the vehicle (110) which is configured as a voice dialogue system, feedback about the vehicle fault;
wherein acquiring the feedback comprises categorizing the feedback in a predefined problem description structure,
wherein the problem description structure comprises the following elements:
- location or part of the vehicle where the problem is perceived,
- circumstances or conditions under which the problem occurs, and
- frequency of occurrence of the problem;
wherein the feedback unit (118) is configured to process the feedback and to derive a degree of severity of a problem from the feedback;
integrating (250) the acquired feedback into the snapshot (300); and
communicating (230), via a communication unit (116) of the vehicle (110), the created snapshot (300) to a backend (120);
evaluating the received snapshot for fault diagnosis in the backend (120).

4. Method (200) according to Claim 3, wherein the snapshot (300) of the electrical and/or electronic vehicle components comprises:
- a vehicle identification number (302) of the vehicle (110); and/or
- a battery status (303) of the vehicle (110); and/or
- a maintenance history (304) of the vehicle (110); and/or
- a geographical position (305) of the vehicle (110); and/or
- current environmental conditions (306) of the vehicle (110); and/or
- a current odometer reading (307) of the vehicle (110); and/or
- the feedback (308) about the vehicle fault.

## Revendications

1. Système (100) d'amélioration simple et dynamique d'un système de diagnostic de véhicule, comprenant au moins un véhicule (110), le véhicule (110) comprenant :
une unité d'entrée (112), qui est conçue pour recevoir une entrée relative à un défaut du véhicule ;
une unité de commande (114), qui est conçue pour, après l'entrée reçue par l'intermédiaire de l'unité d'entrée (112), créer un instantané (300) des composants électriques et/ou électroniques du véhicule,
l'instantané (300) comprenant un état actuel de tous les composants électriques et/ou électroniques du véhicule au moment de l'entrée reçue et un horodatage (309) du moment de l'entrée reçue par l'intermédiaire de l'unité d'entrée (112), et comprenant en outre une version logicielle (310), qui est installée et exécutée dans le véhicule (110) ou dans les composants électriques et/ou électroniques du véhicule,
une unité de rétroaction (118), l'unité de rétroaction en tant que système de dialogue vocal étant conçue pour capturer une rétroaction à propos du défaut du véhicule ;
la capture de la rétroaction comprenant la division de la rétroaction en une structure de description de problème prédéfinie, la structure de description de problème comprenant les éléments suivants :
- lieu ou partie du véhicule où le problème est perçu,
- circonstances ou conditions dans lesquelles le problème survient, et
- fréquence d'apparition du problème,
l'unité de rétroaction (118) étant conçue pour traiter la rétroaction et pour déduire un degré de gravité d'un problème à partir de la rétroaction ; et
la rétroaction capturée étant intégrée dans l'instantané (300) ; et
une unité de communication (116), qui est conçue pour transmettre l'instantané (300) créé à un système dorsal (120) ;
le système dorsal (120) étant configuré pour évaluer l'instantané reçu à des fins de diagnostic de défaut.

2. Système (100) selon la revendication 1, l'instantané (300) des composants électriques et/ou électroniques du véhicule comprenant :
- un numéro d'identification de véhicule (302) du véhicule (110) ; et/ou
- un état de la batterie (303) du véhicule (110) ; et/ou
- un historique de maintenance (304) du véhicule (110) ; et/ou
- une position géographique (305) du véhicule (110) ; et/ou
- les conditions environnementales actuelles (306) du véhicule (110) ; et/ou
- un kilométrage actuel (307) du véhicule (110) ; et/ou
- la rétroaction (308) à propos du défaut du véhicule.

3. Procédé (200) d'amélioration simple et dynamique d'un système de diagnostic de véhicule, comprenant :
réception (210), par l'intermédiaire d'une unité d'entrée (112) d'un véhicule (110), d'une entrée relative à un défaut du véhicule ;
création (220), par le biais d'une unité de commande (114) du véhicule (110), d'un instantané (300) des composants électriques et/ou électroniques du véhicule,
l'instantané (300) comprenant un état actuel de tous les composants électriques et/ou électroniques du véhicule au moment de l'entrée reçue et un horodatage (309) du moment de l'entrée reçue par l'intermédiaire de l'unité d'entrée (112), et comprenant en outre une version logicielle (310), qui est installée et exécutée dans le véhicule (110) ou dans les composants électriques et/ou électroniques du véhicule ;
capture (240), par l'intermédiaire d'une unité de rétroaction (118) du véhicule (110), qui est conçue en tant que système de dialogue vocal, d'une rétroaction à propos du défaut du véhicule ;
la capture de la rétroaction comprenant la division de la rétroaction en une structure de description de problème prédéfinie, la structure de description de problème comprenant les éléments suivants :
- lieu ou partie du véhicule où le problème est perçu,
- circonstances ou conditions dans lesquelles le problème survient, et
- fréquence d'apparition du problème ;
l'unité de rétroaction (118) étant conçue pour traiter la rétroaction et pour déduire un degré de gravité d'un problème à partir de la rétroaction ;
intégration (250) de la rétroaction capturée dans l'instantané (300) ; et
transmission (230), par l'intermédiaire d'une unité de communication (116) du véhicule (110), de l'instantané créé (300) à un système dorsal (120) ;
évaluation de l'instantané reçu à des fins de diagnostic de défaut dans le système dorsal (120).

4. Procédé (200) selon la revendication 3, l'instantané (300) des composants électriques et/ou électroniques du véhicule comprenant :
- un numéro d'identification de véhicule (302) du véhicule (110) ; et/ou
- un état de la batterie (303) du véhicule (110) ; et/ou
- un historique de maintenance (304) du véhicule (110) ; et/ou
- une position géographique (305) du véhicule (110) ; et/ou
- les conditions environnementales actuelles (306) du véhicule (110) ; et/ou
- un kilométrage actuel (307) du véhicule (110) ; et/ou
- la rétroaction (308) à propos du défaut du véhicule.
